(19) Europäisches Patentamt / European Patent Office / Office européen des brevets

(11) **EP 3 960 423 B1**

(12) **EUROPÄISCHE PATENTSCHRIFT**

(45) Veröffentlichungstag und Bekanntmachung des Hinweises auf die Patenterteilung:
**29.03.2023  Patentblatt 2023/13**

(21) Anmeldenummer: **21185514.3**

(22) Anmeldetag: **14.07.2021**

(51) Internationale Patentklassifikation (IPC):
**B29C 49/02** (2006.01)  *B29C 49/06* (2006.01)
*B29C 49/12* (2006.01)  *B29C 49/46* (2006.01)
*B29K 67/00* (2006.01)  *B29L 31/00* (2006.01)
*B29C 49/64* (2006.01)

(52) Gemeinsame Patentklassifikation (CPC):
**B29C 49/02;** B29C 49/06; B29C 49/12; B29C 49/46;
B29C 49/6409; B29C 2049/023; B29C 2049/4697;
B29K 2067/003; B29L 2031/7158

(54) **VERFAHREN UND VORRICHTUNG ZUM HERSTELLEN VON KUNSTSTOFFVORFORMLINGEN UND KUNSTSTOFFBEHÄLTNISSEN MIT THERMISCHEN VORFORMLINGSSPEICHER**

METHOD AND APPARATUS FOR PRODUCING PLASTIC PREFORMS AND PLASTIC CONTAINERS WITH THERMAL PREFORM STORAGE

PROCÉDÉ ET DISPOSITIF DE FABRICATION DE PRÉFORMES EN MATIÈRE PLASTIQUE ET DE RÉCIPIENTS EN MATIÈRE PLASTIQUE COMPORTANT UN DISPOSITIF DE STOCKAGE THERMIQUE DE PRÉFORMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2020   DE 102020122471**

(43) Veröffentlichungstag der Anmeldung:
**02.03.2022   Patentblatt 2022/09**

(73) Patentinhaber: KRONES AG
**93073 Neutraubling (DE)**

(72) Erfinder: **Hirdina, Jochen**
**93073 Neutraubling (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
**EP-A2- 2 392 447          DE-A1- 10 150 780**
**DE-A1-102016 103 756**

**Beschreibung**

Die vorliegende Erfindung bezieht sich auf ein Verfahren zum Betreiben einer Vorrichtung zum Herstellen von Kunststoffvorformlingen und Kunststoffbehältnissen und auf eine Vorrichtung zum Herstellen von Kunststoffvorformlingen und Kunststoffbehältnissen. Derartige Vorrichtungen und Verfahren sind aus dem Stand der Technik seit langem bekannt. Aus dem internen Stand der Technik der Anmelderin ist dabei bekannt, dass zunächst Kunststoffvorformlinge mittels eines Spritzgussprozesses hergestellt werden und anschließend in Form von Schüttgut bis zur weiteren Verarbeitung zwischengelagert werden. Zur Weiterverarbeitung werden die Vorformlinge dann als Schüttgut einer Vorformlingsortiereinrichtung zugeführt und in geordneter Form einer Heizeinrichtung und einer nachfolgenden Blasformmaschine zugeführt, welche die Kunststoffvorformlinge zu Kunststoffbehältnissen umformt. Derartige Verfahren und Vorrichtungen sind in den Patentschriften EP2392447A2, DE102016-103756A1, DE10150780A1 beschrieben.

Dieser oben beschriebene zweistufige Streckblasprozess zeichnet sich demnach dadurch aus, dass der Vorformlingherstellungsprozess und der Streckblas- bzw. Umformungsprozess voneinander getrennt sind. Der Nachteil gegenüber einem einstufigen Verfahren liegt hierbei allerdings in dem Verlust der ersten Wärme, d. h. der Restwärmeinhalt der durch das Aufschmelzen des PET beim Spritzgießen noch in dem Vorformling vorhanden ist (Verarbeitungstemperatur beim Spritzgießen ca. 280°C; Abkühltemperatur ca. 40 bis 70°C). Üblicherweise werden die Vorformlinge dabei bei Raumtemperatur verarbeitet. Durch die zunehmende Vorwärtsintegration der Wertschöpfungskette bei Kunden mit großem Ausstoßvolumen wird jedoch auch die Vorformlingherstellung zunehmend direkt in den Abfüllbetrieb integriert. Eine direkte Kopplung der beiden Prozesse Spritzgießen und Blasformen bzw.

Streckblasformen ohne Verlust der ersten Wärme würde deutliches Einsparpotential beim Energieverbrauch (ca. 30 %) aber auch bei der Maschineninvestition (z. B. 30 % kürzeres Ofenmodul) bedeuten.

Das Problem bei derartigen Kopplungsansätzen (Integration der Vorformlingherstellung in den Abfüllbetrieb) ist jedoch, dass aufgrund des eingeschränkten Regelungsprozesses der IR-Linearofentechnologie eine gleichmäßige Vorformlingeingangstemperatur in den Ofen von +/- 1°C zwischen den aufeinanderfolgenden Vorformlingen gewährleistet werden muss und eine Schwankung über einen längeren Zeitraum (Tagesschwankungen) von größer +/- 5°C zu einem Verlust des Prozessfensters führen kann. Daher ist es nahezu unmöglich die erste Wärme (60°C) des Spritzgießens zu verwenden, da bereits kleinere Stopps (< 5 min), wie sie auf einer Abfülllinie immer wieder einmal vorkommen können, nicht ausgeglichen werden können und die Vorformlingtemperatur zu stark abfällt und außerhalb der Prozessgrenzen liegt.

Kommt es dabei beispielsweise zu einem derartigen Stopp, kühlen die Vorformlinge auf der nicht temperierten Transportstrecke zwischen der Spritzgussmaschine und der vor der Blasformmaschine angeordneten Heizeinrichtung über die Zeit ab und es kann keine gleichmäßige Vorformlingeingangstemperatur bzw. notwendiger Vorformlingenergiegehalt in die Heizeinrichtung gewährleistet werden. Im internen Stand der Technik der Anmelderin ist es dann erforderlich diese Vorformlinge auszuschleusen oder rückzuführen.

Der vorliegenden Erfindung liegt daher die Aufgabe zugrunde, ein Verfahren und eine Vorrichtung zu schaffen bei welchem/bei welcher die oben genannten Nachteile vermieden werden und insbesondere die Kunststoffvorformlinge auch nach bzw. bei einem Stopp in der Produktionslinie eine Temperatur aufweisen, mit welcher sie ohne weiteres Aufheizen weiter verarbeitet werden können.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf ein Verfahren zum Betreiben einer Vorrichtung zum Herstellen von Kunststoffvorformlingen und Kunststoffbehältnissen gerichtet, umfassend wenigstens eine Spritzgussmaschine und eine Blasformmaschine, wobei die Kunststoffvorformlinge innerhalb der Spritzgussmaschine spritzgegossen werden und innerhalb der Blasformmaschine zu Kunststoffbehältnissen umgeformt werden und von der Spritzgussmaschine zu der Blasformmaschine transportiert werden, und wobei stromabwärts der Spritzgussmaschine eine Heizeinrichtung angeordnet ist, welche die Kunststoffvorformlinge auf eine für die Blasformung notwendige Temperatur erwärmt, wobei die Spritzgussmaschine und die Blasformmaschine miteinander gekoppelt sind.

Erfindungsgemäß werden die in der Spritzgussmaschine hergestellten Kunststoffvorformlinge direkt nach der Herstellung an einen thermischen Vorformlingspeicher übergeben, welcher die Kunststoffvorformlinge auf einer vorgegebenen, insbesondere konstanten Temperatur hält und wobei eine Geschwindigkeit und/oder wenigstens ein Parameter wenigstens einer nachfolgenden Behandlungseinrichtung veränderbar ist und diese Geschwindigkeit und/oder dieser wenigstens eine Parameter einem Energieinhalt des Kunststoffvorformlings angepasst ist.

Mit der erfindungsgemäßen Vorrichtung wird demnach zur Lösung des oben genannten Problems ein thermischer Speicher für Vorformlinge direkt nach dem Spritzgießen vorgeschlagen, so dass Linienstopps von bis zu 10 min problemlos abgepuffert werden können ohne, dass die Energie in den Vorformlingen verloren geht, da diese während der Dauer des Stopps in dem temperierten Speicher verbleiben. Der im Vergleich zu Abfülllinie stabilere Spritzgießprozess kann so problemlos an- und abgefahren oder im besten Fall gar nicht unterbrochen werden.

Im Vergleich zu früheren aus dem internen Stand der Anmelderin bekannten Ansätzen, wie beispielsweise ein erneutes Aufheizen der Vorformlinge mittels sogenannten Hotbox, ist mit der nun vorgeschlagenen Lösung keine Aufheizung der Vorformlinge mehr notwendig, da diese mit der ersten Wärme (Temperatur nach Spritzgießen) in dem Speicher ankommen und somit die Verweilzeit in dem entsprechenden Puffer/Speicher beliebig sein kann, da der Energieinhalt bzw. die Temperatur der Vorformlinge nur gehalten werden muss und nicht aktiv aufgeheizt oder gekühlt werden soll. Der Speicher/Puffer kann also komplett gefüllt oder geleert werden ohne, dass sich die Temperatur der Vorformlinge am Auslauf des thermischen Vorformlingspeichers ändert. Es muss lediglich die Innentemperatur des thermischen Vorformlingspeichers, welche der Einlauftemperatur der Vorformlinge entspricht, konstant gehalten werden. Der Energieverbrauch, um die Temperatur zu halten ist dabei mit beispielsweise einer entsprechenden Isolierung relativ überschaubar und steht im Verhältnis zur Einsparung in einem guten Verhältnis.

Unter der Kopplung zwischen der Spritzgussmaschine und der Blasformmaschine wird dabei verstanden, dass diese innerhalb einer Gesamt-Produktionsanlage bzw. innerhalb eines Produktionsblocks angeordnet sind und somit beispielsweise die gleichen Fördergeschwindigkeiten aufweisen bzw. die Fördergeschwindigkeiten aufeinander abgestimmt sind. Insbesondere sind die Spritzgussmaschine und die Blasformmaschine demnach räumlich und produktionstechnisch miteinander mechanisch und steuerungstechnisch verbunden und nicht voneinander getrennt. Denkbar ist dabei bevorzugt auch eine Komplettanlage bzw. einen Komplettblock bereitzustellen, von der Herstellung der Kunststoffvorformlinge in der Spritzgussmaschine bis hin zu befüllten und etikettierten Kunststoffbehältnissen.

Unter dem Halten auf einer vorgegebenen und insbesondere bzw. bevorzugt konstanten Temperatur der Vorformlinge in dem thermischen Vorformlingspeicher, welche die Vorformlinge nach Spritzgießen aufweisen, wird verstanden, dass die Vorformlinge innerhalb des thermischen Vorformlingspeichers nicht aktiv über beispielsweise Heizeinrichtungen oder Heizelemente erwärmt werden, sondern lediglich auf der Temperatur gehalten werden, mit welcher sie dem thermischen Vorformlingspeicher zugeführt werden. Bevorzugt entspricht demnach eine Einlauftemperatur der Vorformlinge in den thermischen Vorformlingspeicher, einer Auslauftemperatur der Vorformlinge aus dem thermischen Vorformlingspeicher.

Unter der direkten Übergabe der in der Spritzgussmaschine hergestellten Kunststoffvorformlinge an den thermischen Vorformlingspeicher ist zu verstehen, dass die Vorformlinge nach der Herstellung ohne weitere Behandlung und ohne ein Zwischenspeichern dem thermischen Vorformlingspeicher zugeführt werden. Dies schließt allerdings nicht aus, dass zwischen der Spritzgussmaschine und dem Speicher Transfernsterne oder dergleichen zum Transportieren der Vorformlinge angeordnet sind, wie beispielsweise Abführ- oder Übergabesterne. Denkbar wäre darüber hinaus auch, zwischen der Spritzgussmaschine und dem Speicher bevorzugt einen Bandtransport anzuordnen oder einen Transport über Shuttles vorzunehmen.

Bei den nachfolgenden Behandlungseinrichtungen handelt es sich dabei bevorzugt um eine Heizeinrichtung und/oder eine Blasformmaschine oder auch eine andere zur Kunststoffbehälterherstellung benötigte Einrichtung wie beispielsweise eine Etikettiereinrichtung, eine Abfülleinrichtung oder dergleichen. Der Energieinhalt des Vorformlings ist dabei bevorzugt eine Temperatur des Vorformlings. Bei dem Parameter kann es sich beispielsweise, je nach Einrichtung, um eine Temperatur innerhalb der Heizeinrichtung, eine zeitliche Dauer der Blasformung oder dergleichen handeln.

Demnach wird eine Geschwindigkeit und/oder ein Parameter der nachfolgenden Behandlungseinrichtung, bevorzugt eine Geschwindigkeit und/oder ein Parameter der Heizeinrichtung und/oder der Blasformmaschine, in Abhängigkeit der Temperatur des Vorformlings verändert. Bevorzugt wird die Geschwindigkeit und/oder der Parameter dabei verändert, um eine Störung in einer oder mehreren der nachfolgenden Behandlungseinrichtungen zu kompensieren insbesondere, wenn eine oder mehrere der nachfolgenden Behandlungseinrichtungen gestoppt werden müssen.

Bevorzugt entspricht dabei die Eingangstemperatur der Vorformlingen in den thermischen Vorformlingspeicher im Wesentlichen der Temperatur, welche die Vorformlinge nach der Herstellung in der Spritzgussmaschine aufweisen. Im Wesentlich bedeutet dabei, dass sich die Eingangstemperatur der Vorformlinge in den thermischen Vorformlingspeicher um nicht mehr als +/- 0 - 3 °C von der Temperatur der Vorformlinge nach der Herstellung in der Spritzgussmaschine unterscheidet, bevorzugt um nicht mehr als +/- 0 - 2 °C, bevorzugt um nicht mehr als +/- 0 - 1 °C und besonders bevorzugt um nicht mehr als +/- 0 - 0,5 °C.

Der Transport der Kunststoffvorformlinge von der Spritzgussmaschine zu der Blasformmaschine erfolgt dabei bevorzugt kontinuierlich, so dass die Kunststoffvorformlinge möglichst schnell der Blasformmaschine zugeführt werden können. Dies ist insbesondere im Hinblick auf die Temperatur der Vorformlinge vorteilhaft, da diese mit der Zeit abnimmt.

Die stromabwärts der Spritzgussmaschine angeordnete Heizeinrichtung weist bevorzugt eine Vielzahl von entlang des Transportpfads der Heizeinrichtung angeordnete Heizelemente, wie beispielsweise Infarotstrahler oder Mikrowellenerzeugungseinrichtungen auf, welche die Kunststoffvorformlinge auf eine für die Blasformung notwendige Temperatur erwärmen. Bei dem Transportpfad der Heizeinrichtung handelt es sich bevorzugt um einen umlaufenden Transportpfad, welcher gekrümmte und geradlinige Transportbereiche aufweist und besonders bevorzugt abwechselnd gekrümmte und geradlinige Transportbereiche aufweist.

Die Blasformmaschine zum Umformen der Kunststoffvorformlinge zu Kunststoffbehältnissen weist bevorzugt eine Vielzahl von Blasformeinrichtungen auf, innerhalb denen die Kunststoffvorformlinge durch Beaufschlagung mit einem flüssigen oder gasförmigen Medium und insbesondere mit Druckluft zu den Kunststoffbehältnissen umgeformt werden. Vorteilhaft ist dabei diese Vielzahl von Blasformeinrichtungen an einem gemeinsamen beweglichen Träger angeordnet. Bei diesem Träger handelt es sich dabei insbesondere um einen drehbaren Träger.

Bevorzugt handelt es sich bei der Blasformmaschine um eine Streckblasmaschine, so dass die Blasformeinrichtungen bzw. Blasstationen jeweils Reckstangen aufweisen, welche die Kunststoffvorformlinge in ihrer Längsrichtung dehnen. Besonders bevorzugt ist die Blasformmaschine innerhalb eines Reinraums angeordnet, welcher die Blasformmaschine gegenüber einer unsterilen Umgebung abgrenzt.

Zur Herstellung der Kunststoffvorformlinge in der Spritzgussmaschine wird bevorzugt eine Spritzgussform temperiert und ein flüssiges Kunststoffgranulat in die Form gespritzt. Anschließend werden die Form und das Granulat temperiert, so dass sich der Vorformling formt. Der fertige Vorformling wird durch Öffnen der Form aus der Form entnommen und bevorzugt an den thermischen Vorformlingspeicher übergeben. Anders als im Stand der Technik verliert der Vorformling demnach vorteilhaft nicht seine bereits vorhandene Wärme durch ein Zwischenlagern oder dergleichen.

Die Vorformlinge werden demnach in der hier beschriebenen Erfindung in einer bevorzugt getakteten Spritzgussmaschine hergestellt und einem thermischen Vorformlingspeicher zugeführt. Der thermische Speicher dient dabei bevorzugt dazu, den Energiegehalt bzw. die Temperatur der Vorformlinge aufrecht zu erhalten. Vorteilhaft ist ein Aufheizen der Vorformlinge innerhalb des Speichers nicht notwendig, da die Vorformlinge bereits warm an den Speicher übergeben werden. Die Vorformlinge verlassen dabei mit einer ersten Temperatur T1 (konstant) den Speicher und werden der Heizeinrichtung mit einer zweiten Temperatur T2 (abhängig von Weg bzw. Zeit zwischen Speicher und Heizeinrichtung) zugeführt. Der gehaltene Energieeinhalt bzw. Temperatur ($T1 > T_{Raum}$) muss beim erneuten Aufheizen des Vorformlings in der Heizeinrichtung nicht mehr zugeführt werden, so dass die Heizleistung bzw. die Heizzeit und somit die Länge der Heizeinrichtung dementsprechend reduziert werden kann.

Bevorzugt sind dabei zwischen dem thermischen Vorformlingspeicher und der Heizeinrichtung eine Vorformling-Sortiereinrichtung und eine Vorformlingzuführung bzw. die Transporteinrichtung zum Transportieren der Vorformlinge von der Spritzgussmaschine zu der Blasformmaschine angeordnet. Die Vorformlinge werden demnach bevorzugt von dem thermischen Vorformlingspeicher an eine Vorformling-Sortiereinrichtung übergeben und gelangen von der Sortiereinrichtung zu der Vorformlingzuführung, welche die Vorformlinge der Heizeinrichtung zuführt.

Bei einer bevorzugten Ausführungsform werden die Kunststoffvorformlinge am Auslauf des thermischen Vorformlingspeichers und/oder am Einlauf der Heizeinrichtung zum Erwärmen der Kunststoffvorformlinge gesperrt. So ist es denkbar, dass bei einer Störung und einem hieraus resultierenden Stopp in beispielsweise der Blasformmaschine der Auslauf der Vorformlinge aus dem Vorformlingspeicher gesperrt wird, so dass die Vorformlinge innerhalb des Speichers zwischengelagert werden und auf Temperatur gehalten werden. Hierdurch kann bei einer Störung in der Blasformmaschine die Herstellung der Kunststoffvorformlinge in der Spritzgussmaschine ungehindert weiterlaufen.

Bei einem Stopp kühlen die Vorformlinge, welche sich gerade zwischen dem Vorformlingspeicher und der Heizeinrichtung auf der Vorformlingzuführung befinden über die Zeit ab. Um demnach ein Ausschleusen oder Rückführen der auf der Strecke der Vorformlingzuführung abgekühlten Vorformlinge zu vermeiden, wird bevorzugt vorgeschlagen, die Zuführung vom thermischen Vorformlingspeicher an den Vorformlingsortierer zu stoppen bzw. zu sperren und zudem bevorzugt die Geschwindigkeit der Heizeinrichtung und der Blasformmaschine zu drosseln und/oder einen Parameter wenigstens einer nachfolgenden Behandlungseinrichtung entsprechend des tatsächlichen Energieinhaltes, bevorzugt der Temperatur, der Vorformlinge anzupassen. Die restlichen, sich noch auf der Vorformlingzuführung befindlichen Vorformlinge werden vorteilhaft mit geringerer (dem bevorzugt reduzierten Energiegehalt des Vorformlings angepasster) Geschwindigkeit durch die Heizeinrichtung transportiert bzw. entsprechend mehr oder weniger in der Heizeinrichtung temperiert und können somit wieder der Blasformmaschine zugeführt werden. Erst wenn sich keine Vorformlinge mehr auf der Transportstrecke der Vorformlingzuführung befinden, wird die Geschwindigkeit der Blasformmaschine und der Heizeinrichtung wieder angehoben bzw. die Parameter der Blasformmaschine und der Heizeinrichtung wieder verändert und neue Vorformlinge mit der Temperatur T1 dem Vorformlingsortierer zugeführt.

Es ist daher mit dem erfindungsgemäßen Verfahren insbesondere auch möglich die erste Wärme der Vorformlinge (Temperatur nach Herstellung in der Spritzgussmaschine) zu nutzen und zudem ein Ausschleusen/Rückführen von zu stark abgekühlten Vorformlingen zu vermeiden.

Bevorzugt wird demnach die Geschwindigkeit der Heizeinrichtung und/oder der Blasformmaschine geregelt bzw. verändert und/oder ein Parameter der Heizeinrichtung und/oder Blasformmaschine verändert. Besonders bevorzugt handelt es sich bei dieser Geschwindigkeit insbesondere um eine Transportgeschwindigkeit der Vorformlinge durch die Heizeinrichtung und/oder die Blasformmaschine und bei dem Parameter um eine Temperatur der Heizeinrichtung und/oder eine zeitliche Dauer der Umformung.

In einer besonders bevorzugten Ausführungsform wird die Temperatur innerhalb des thermischen Vorformlingspeichers im Wesentlichen konstant gehalten. Unter im Wesentlichen wird dabei verstanden, dass die Temperatur im Innenraum des Vorformlingspeichers um nicht mehr als +/- 2,5 °C von der Temperatur abweicht, welche die Vorformlinge nach dem Herstellungsprozess innerhalb der Spritzgussmaschine aufweisen, bevorzugt um nicht mehr als +/- 1,5° C, bevorzugt um nicht mehr als +/- 1 °C und besonders bevorzugt um nicht mehr als +/- 0,5 °C.

Der thermische Vorformlingspeicher ist dabei idealerweise bevorzugt ähnlich oder gleich einer aus dem Stand der Technik der Anmelderin bekannten Vorformlingschütte (mit Deckel) aufgebaut und nur um eine Temperierung ergänzt. So können vorteilhafterweise sämtliche bekannte Standardkomponenten, wie Steilförderer und Rollensortierer (alternativ Scheibensortierer) zur Ausbildung des Speichers genutzt werden. Bevorzugt ist dabei einzig der Transport der warmen Vorformlinge von dem Vorformlingspeicher zu der Blasformmaschine noch offen bzw. nicht temperiert. Daher wird bevorzugt ein schnelles Transportsystem und/oder eine kurze Transportstrecke verwendet, um den Temperaturabfall der Vorformlinge während des Transports so gering wie möglich zu halten. Zudem werden die Vorformlinge durch diese Vorgehensweise nach dem FIFO Prinzip transportiert, so dass keine Schwankungen zwischen den einzelnen Vorformlingen und insbesondere deren Temperaturen auftreten.

Diese Anforderung kann dabei bevorzugt auch durch einen Vorformlinglufttransport gewährleistet werden, so dass auch die Vorformlingherstellung und die Blasformung örtlich nicht direkt nebeneinanderstehen müssen. Bevorzugt werden die Vorformlinge demnach mittels einer Lufttransporteinrichtung von der Spritzgussmaschine zu der Blasformmaschine transportiert. Generell sollte dabei jedoch die Strecke zwischen Vorformlingspeicher und Blasformmaschine bzw. zwischen Vorformlingspeicher und Heizeinrichtung so kurz wie möglich gehalten werden, um die maximale Einsparung zu erzielen.

Die Temperierung des Innenraums erfolgt dabei bevorzugt über Mittel, welche aus einer Gruppe ausgewählt sind, welche Wärmetauscher, Radiatoren, Heizgebläse, Heizmatten und dergleichen enthält. Dabei ist es besonders vorteilhaft Medien zu benutzen, welche beim Spritzgießen ohnehin als Abfallprodukt anfallen, wie Warmwasser, heiße Luft und dergleichen.

Wie bereits oben beschrieben ist das Energieeinsparpotenzial durch Nutzung des thermischen Vorformlingspeichers zur herkömmlichen Vorformlingerwärmung bei > 30 % zu sehen. Dies lässt sich bevorzugt durch Annahme einer Verarbeitungstemperatur beim Streckblasen von 95°C, einer Ausgangstemperatur des thermischen Speichers von 50°C, einen Verlust beim Transport von 2°C und einer Raumtemperatur von 18°C folgendermaßen berechnen:

$$(95°C - (50°C - 2°C)) / (95°C - 18°C) = 47°C / 77°C = 0,61$$

$$1-0,61 = 39 \%$$

Bei einer weiteren bevorzugten Ausführungsform können die Kunststoffvorformlinge zeitlich unbegrenzt innerhalb des thermischen Vorformlingspeichers verbleiben ohne, dass sich die Temperatur der Kunststoffvorformlinge erhöht. Dies wird bevorzugt dadurch erreicht, dass der Innenraum des thermische Vorformlingspeichers mit den oben genannten Mitteln wenigstens abschnittsweise und besonders bevorzugt vollständig auf einer konstanten Temperatur gehalten wird, die Vorformlinge bevorzugt in dem Speicher jedoch nicht aktiv erwärmt werden.

In einer weiteren vorteilhaften Ausführungsform beträgt die Temperatur zwischen aufeinanderfolgenden Kunststoffvorformlingen beim Einlauf in die Heizeinrichtung +/- 1 °C. Besonders bevorzugt liegt ein Temperaturunterschied aufeinanderfolgender Kunststoffvorformlinge bei +/- 0,5 °C. Vorteilhaft ist der thermische Vorformlingspeicher demnach auch dazu geeignet und bestimmt die Temperatur aufeinanderfolgender Kunststoffvorformling wenigstens zeitweise auf einem im Wesentlichen gleichen Betrag zu halten. Unter aufeinanderfolgenden Vorformlingen werden dabei Vorformlinge verstanden, welche innerhalb der Transporteinrichtung bzw. in Transportrichtung gesehen nebeneinander und/oder hintereinander transportiert werden.

Die vorliegende Erfindung ist weiterhin auch auf eine Vorrichtung zum Herstellen von Kunststoffvorformlingen und Kunststoffbehältnissen gerichtet, umfassend wenigstens eine Spritzgussmaschine zum Spritzgießen der Kunststoffvorformlinge und eine Blasformmaschine zum Umformen der Kunststoffvorformlinge zu Kunststoffbehältnissen, wobei die Spritzgussmaschine und die Blasformmaschine miteinander koppelbar sind und mit einer Transporteinrichtung zum Transportieren der Kunststoffvorformlinge von der Spritzgussmaschine zu der Blasformmaschine, wobei die Vorrichtung weiter eine stromabwärts der Spritzgussmaschine angeordnete Heizeinrichtung umfasst, innerhalb welcher die Kunststoffvorformlinge auf eine für die Blasformung notwendige Temperatur erwärmbar sind.

Erfindungsgemäß werden die in der Spritzgussmaschine hergestellten Kunststoffvorformlinge direkt nach der Herstellung an einen thermischen Vorformlingspeicher übergeben, welcher die Kunststoffvorformlinge auf einer vorgegebenen, insbesondere konstanten Temperatur hält und wobei zwischen dem thermischen Vorformlingspeicher und einer Heizeinrichtung zum Erwärmen der Kunststoffvorformlinge eine Sensoreinrichtung vorgesehen ist, welche einen für den Energiegehalt charakteristischen Wert eines Preforms misst, wobei dieser Wert an eine Steuerungseinrichtung übergeben wird, mit welcher eine Geschwindigkeit und/oder wenigstens ein Parameter von wenigstens einer nachfolgenden Behandlungseinrichtung geregelt wird.

Es wird demnach auch verfahrensseitig vorgeschlagen, direkt nach dem Spritzgießen der Vorformlinge einen thermischen Speicher für Vorformlinge vorzusehen, so dass Linienstopps von bis zu 10 min problemlos abgepuffert werden können ohne, dass die Energie in den Vorformlingen verloren geht.

Wie oben bereits erwähnt, handelt es sich bei dieser Geschwindigkeit um eine Transportgeschwindigkeit der Vorformlinge. Bevorzugt wird die Geschwindigkeit geregelt, wenn eine Störung in einer oder mehreren Einrichtungen, wie beispielsweise der Blasformmaschine, einer Etikettiereinrichtung oder einer Abfülleinrichtung, vorliegt oder eine oder mehrere dieser Einrichtungen gestoppt werden müssen.

Bei einer bevorzugten Ausführungsform ist am Auslauf des thermischen Vorformlingspeichers und/oder am Einlauf einer Heizeinrichtung zum Erwärmen der Kunststoffvorformlinge eine Sperreinrichtung vorgesehen. Bei der Sperreinrichtung handelt es sich bevorzugt um eine Schranke, einen Sperrfinger oder dergleichen.

Hierdurch kann bevorzugt die Zuführung der Vorformlinge von dem Vorformlingspeicher an einen dem Speicher nachfolgenden Vorformlingsortierer und an die Vorformlingzuführung gestoppt werden. Die Sperreinrichtung wird dabei besonders bevorzugt aktiviert, wenn beispielsweise in der Blasformmaschine oder der Blasformmaschine folgenden Abfülleinrichtung oder Etikettiereinrichtung eine Störung bzw. ein Stopp auftritt.

Es wird dadurch bevorzugt verhindert, dass die Vorformlinge weiter zu der Vorformlingzuführung gelangen und hier abkühlen, sondern stattdessen innerhalb des Speichers auf ihrer Temperatur gehalten werden. Sobald die Störung behoben ist, werden die Vorformlinge weitertransportiert und können problemlos und ohne zusätzlichen Aufwand weiterverarbeitet werden. Die Vorformlinge, die sich zum Zeitpunkt der Aktivierung der Sperreinrichtungen bereits auf der Vorformlingzuführung befunden haben, werden, nach Behebung der Störung, bevorzugt in der Heizeinrichtung mit angepassten Energieinhalt bzw. für längere Zeit als üblich wieder auf die benötigte Temperatur erwärmt.

Bei einer weiteren bevorzugten Ausführungsform ist der thermische Vorformlingspeicher stromaufwärts der Spritzgussmaschine und stromabwärts der Blasformmaschine angeordnet. Besonders bevorzugt ist der thermische Vorformlingspeicher direkt nach der Spritzgussmaschine angeordnet. Dies schließt allerdings nicht aus, dass zwischen der Spritzgussmaschine und dem Vorformlingspeicher weitere Einrichtungen wie Transfersterne, Transportbänder, ein Transport über Shuttles oder dergleichen angeordnet sind.

In einer weiteren vorteilhaften Ausführungsform handelt es sich bei der nachfolgenden Behandlungseinheit um eine Heizeinrichtung zum Erwärmen der Kunststoffvorformlinge, eine Blasformmaschine zum Umformen der Kunststoffvorformlinge zu Kunststoffbehältnisse, eine Etikettiereinrichtung zum Etikettieren der Kunststoffbehältnisse, eine Abfülleinrichtung zum Befüllen der Kunststoffbehältnisse oder dergleichen.

Weitere Vorteile und Ausführungsformen ergeben sich aus den beigefügten Zeichnungen. Darin zeigt:

Fig. 1    eine schematische Darstellung einer erfindungsgemäßen Ausführungsform einer Vorrichtung zum Herstellen von Kunststoffvorformlingen und Kunststoffbehältnissen mit thermischen Vorformlingspeicher; und

Fig. 2    eine grafische Darstellung des Temperaturverlaufs der Kunststoffvorformlinge.

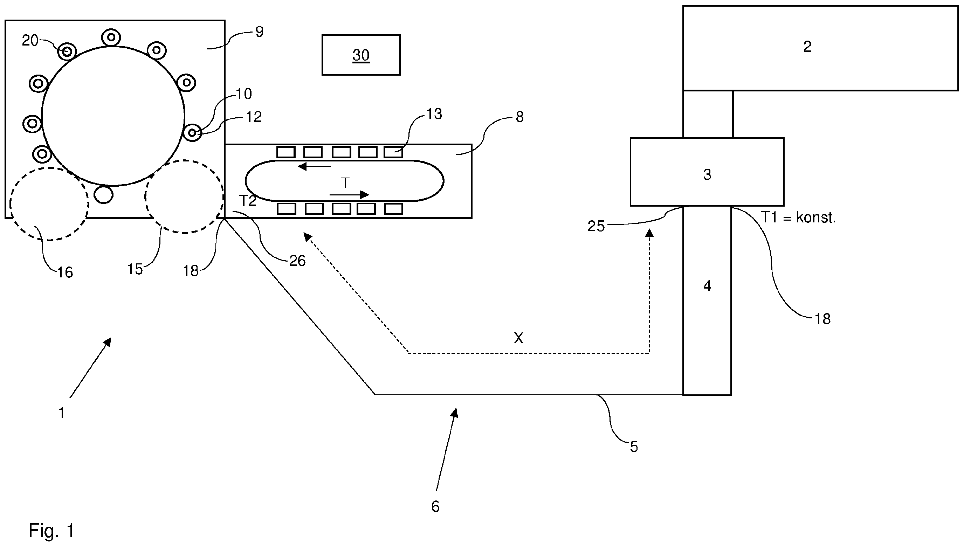

Figur 1 zeigt eine schematische Darstellung einer erfindungsgemäßen Vorrichtung 1 zum Herstellen von Kunststoffvorformlingen 10 und Kunststoffbehältnissen 20. Das Bezugszeichen 2 bezieht sich dabei auf eine Spritzgussmaschine, in welcher die Kunststoffvorformlinge 10 hergestellt werden. Nach der Herstellung werden die Kunststoffvorformlinge an den thermischen Vorformlingspeicher 3 übergeben und hier auf einer konstanten Temperatur T1 gehalten, welche der Temperatur entspricht, mit welcher die Kunststoffvorformlinge aus der Spritzgussmaschine 2 auslaufen.

Die Kunststoffvorformlinge können dabei bevorzugt am Auslauf 25 des thermischen Vorformlingspeichers 3 mittels einer Sperreinrichtung 18 am Weitertransport gehindert werden, wenn beispielsweise eine nachfolgende Maschine gestoppt wurde. Ansonsten durchlaufen die Kunststoffvorformlinge in einer vorgegebenen Zeit den Vorformlingspeicher 3 und gelangen anschließend in eine Sortiereinrichtung 4, welche die Vorformlinge in einer vorgegebenen Weise und insbesondere gleichartig sortiert, bevor die Kunststoffvorformlinge mittels einer Transporteinrichtung 5 entlang der Transportstrecke X bzw. der Vorformlingzuführung 6 der Heizeinrichtung 8 zugeführt werden. Am Einlauf 26 der Heizeinrichtung 8 kann wieder eine Sperreinrichtung 18 vorgesehen sein.

Während des Transports entlang der Transportstrecke X verlieren die Kunststoffvorformlinge an Wärme und kühlen auf die Temperatur T2 ab. Um dieses Abkühlen bzw. diesen Verlust des Energiegehalts der Vorformlinge möglichst gering zu halten ist die Transporteinrichtung 5 bzw. die Vorformlingzuführung 6 bevorzugt möglichst kurz ausgebildet. Im Idealfall so kurz, dass kein Temperaturverlust vorliegt. Die Vorformlinge werden demnach mit einer Temperatur T2 der Heizeinrichtung 8 zugeführt, wobei gilt T2 < T1, und hier mittels einer Vielzahl entlang des Transportrichtung T angeordneter Heizelemente 13 auf eine für die Blasformung notwendige Temperatur erwärmt. Diese Erwärmung erfordert jedoch aufgrund des thermischen Speichers 3 wesentlich weniger Zeit und Energie als ohne die Anordnung eines thermischen Speichers, insbesondere im Falle einer Störung oder eines Stopps einer nachfolgenden Maschine, wie beispielsweise einer Etikettiermaschine oder einer Abfüllmaschine.

Nach der Erwärmung in der Heizeinrichtung 8 werden die Kunststoffvorformlinge über beispielsweise ein (schematisch dargestelltes) Zuführrad 15 der Blasformmaschine 9 zugeführt, wobei die Kunststoffvorformlinge 10 hier innerhalb von Blasformen 12 zu Kunststoffbehältnissen 20 umgeformt werden. Das Bezugszeichen 30 kennzeichnet schematisch eine Steuerungseinrichtung, welche beispielsweise eine Geschwindigkeit der Heizeinrichtung 8 und der Blasformmaschine regeln bzw. steuern kann. Über ein (schematisch dargestelltes) Abführrad werden die Kunststoffbehältnisse 20 von der Blasformmaschine 9 abgeführt.

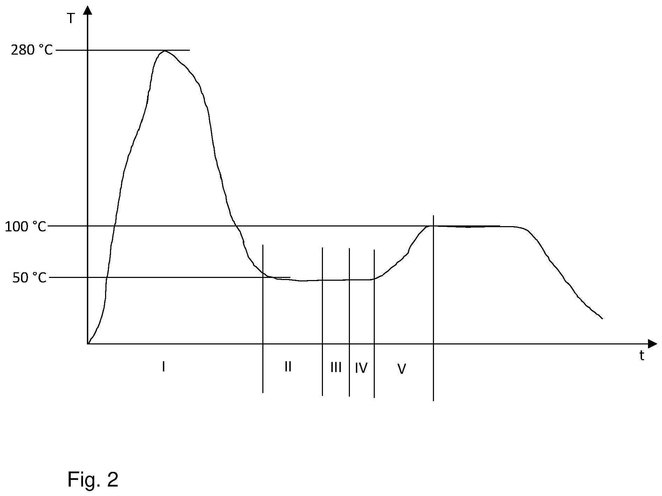

Figur 2 zeigt eine grafische Darstellung des Temperaturverlaufs der Kunststoffvorformlinge 10. Der Abschnitt I kennzeichnet dabei den Temperaturverlauf beim Spritzgießen. Dabei ist erkennbar, dass die Temperatur der Vorformlinge beim Spritzgießen bis auf ca. 280 °C ansteigen kann und die Vorformlinge bei ca. 50 °C die Spritzgussmaschine verlassen und entsprechen im Abschnitt II mit dieser Temperatur in den thermischen Speicher einlaufen und hier auf dieser Temperatur gehalten werden.

Die Abschnitte III und IV kennzeichnen den Sortierer und den Vorformlingtransport, wobei hier die Vorformlinge im Idealfall auf der gleichen Temperatur bei ca. 50 °C bleiben. Der Abschnitt V kennzeichnet das Erwärmen und Streckblasen, wobei die Kunststoffvorformlinge hier auf eine Temperatur von ca. 100 °C erwärmt werden und bei dieser Temperatur zu Kunststoffbehältnissen umgeformt bzw. streckgeblasen werden.

**Bezugszeichenliste**

| 1 | Vorrichtung |
| 2 | Spritzgussmaschine |
| 3 | thermischer Vorformlingspeicher |
| 4 | Sortiereinrichtung |
| 5 | Transporteinrichtung |
| 6 | Vorformlingzuführung |
| 8 | Heizeinrichtung |
| 9 | Blasformmaschine |
| 10 | Kunststoffvorformlinge |
| 12 | Blasform |
| 13 | Heizelemente |
| 15 | Zuführrad |
| 16 | Abführrad |
| 18 | Sperreinrichtung |
| 20 | Kunststoffbehältnisse |
| 25 | Auslauf des thermischen Vorformlingspeicher 3 |
| 26 | Einlauf der Heizeinrichtung 8 |
| 30 | Steuerungseinrichtung |
| T | Transportrichtung innerhalb der Heizeinrichtung 8 |
| X | Transportstrecke |
| I | Spritzgießen |
| II | thermischer Speicher |
| III | Sortierer |
| IV | Vorformlingtransport |
| V | Erwärmen - Streckblasen |

**Patentansprüche**

1.  Verfahren zum Betreiben einer Vorrichtung (1) zum Herstellen von Kunststoffvorformlingen (10) und Kunststoffbehältnissen (20), umfassend wenigstens eine Spritzgussmaschine (2) und eine Blasformmaschine (9), wobei die Kunststoffvorformlinge (10) innerhalb der Spritzgussmaschine (2) spritzgegossen werden und innerhalb der Blasformmaschine (9) zu Kunststoffbehältnissen (20) umgeformt werden und von der Spritzgussmaschine (2) zu der Blasformmaschine (9) transportiert werden, und wobei stromabwärts der Spritzgussmaschine (2) eine Heizeinrichtung (8) angeordnet ist, welche die Kunststoffvorformlinge (10) auf eine für die Blasformung notwendige Temperatur erwärmt, wobei die Spritzgussmaschine (2) und die Blasformmaschine (9) miteinander gekoppelt sind,
    **dadurch gekennzeichnet, dass**
    die in der Spritzgussmaschine (2) hergestellten Kunststoffvorformlinge (10) direkt nach der Herstellung an einen thermischen Vorformlingspeicher (3) übergeben werden, welcher die Kunststoffvorformlinge (10) auf einer vorgegebenen, insbesondere konstanten Temperatur hält und wobei eine Geschwindigkeit und/oder wenigstens ein Parameter wenigstens einer nachfolgenden Behandlungseinrichtung veränderbar ist und diese Geschwindigkeit und/oder dieser wenigstens eine Parameter einem Energieinhalt des Kunststoffvorformlings angepasst ist.

2. Verfahren nach Anspruch 1,
**dadurch gekennzeichnet, dass**
die Kunststoffvorformlinge (10) am Auslauf des thermischen Vorformlingspeichers (3) und/oder am Einlauf der Heizeinrichtung (8) zum Erwärmen der Kunststoffvorformlinge (10) gesperrt werden.

3. Verfahren nach wenigstens einem der vorhergehenden Ansprüche,
**dadurch gekennzeichnet, dass**
die Temperatur innerhalb des thermischen Vorformlingspeichers (3) im Wesentlichen konstant gehalten wird.

4. Verfahren nach wenigstens einem der vorhergehenden Ansprüche,
**dadurch gekennzeichnet, dass**
die Kunststoffvorformlinge (10) zeitlich unbegrenzt innerhalb des thermischen Vorformlingspeichers (3) verbleiben können ohne, dass sich die Temperatur der Kunststoffvorformlinge (10) erhöht.

5. Verfahren nach wenigstens einem der vorhergehenden Ansprüche,
**dadurch gekennzeichnet, dass**
die Temperatur zwischen aufeinanderfolgenden Kunststoffvorformlingen (10) beim Einlauf in die Heizeinrichtung (8) +/- 1°C beträgt.

6. Vorrichtung (1) zum Herstellen von Kunststoffvorformlingen (10) und Kunststoffbehältnissen (20), umfassend wenigstens eine Spritzgussmaschine (2) zum Spritzgießen der Kunststoffvorformlinge (10) und eine Blasformmaschine (9) zum Umformen der Kunststoffvorformlinge (10) zu Kunststoffbehältnissen (20), wobei die Spritzgussmaschine (2) und die Blasformmaschine (9) miteinander koppelbar sind und mit einer Transporteinrichtung (5) zum Transportieren der Kunststoffvorformlinge (10) von der Spritzgussmaschine (2) zu der Blasformmaschine (9), wobei die Vorrichtung (1) weiter eine stromabwärts der Spritzgussmaschine (2) angeordnete Heizeinrichtung (8) umfasst, innerhalb welcher die Kunststoffvorformlinge (10) auf eine für die Blasformung notwendige Temperatur erwärmbar sind,
**dadurch gekennzeichnet, dass**
die in der Spritzgussmaschine (2) hergestellten Kunststoffvorformlinge (10) direkt nach der Herstellung an einen thermischen Vorformlingspeicher (3) übergeben werden, welcher die Kunststoffvorformlinge (10) auf einer vorgegebenen, insbesondere konstanten Temperatur hält und wobei zwischen dem thermischen Vorformlingspeicher (3) und einer Heizeinrichtung (8) zum Erwärmen der Kunststoffvorformlinge (10) eine Sensoreinrichtung vorgesehen ist, welche einen für den Energiegehalt charakteristischen Wert eines Preforms misst, wobei dieser Wert an eine Steuerungseinrichtung (30) übergeben wird, mit welcher eine Geschwindigkeit und/oder wenigstens ein Parameter von wenigstens einer nachfolgenden Behandlungseinrichtung geregelt wird.

7. Vorrichtung (1) nach Anspruch 6,
**dadurch gekennzeichnet, dass**
am Auslauf (25) des thermischen Vorformlingspeichers (3) und/oder am Einlauf (26) der Heizeinrichtung (8) eine Sperreinrichtung (18) vorgesehen ist.

8. Vorrichtung (1) nach wenigstens einem der vorhergehenden Ansprüche,
**dadurch gekennzeichnet, dass**
der thermische Vorformlingspeicher (3) stromaufwärts der Spritzgussmaschine (2) und stromabwärts der Blasformmaschine (9) angeordnet ist.

9. Vorrichtung (1) nach wenigstens einem der vorhergehenden Ansprüche,
**dadurch gekennzeichnet, dass**
es sich bei der nachfolgenden Behandlungseinheit um eine Heizeinrichtung (8) zum Erwärmen der Kunststoffvorformlinge, eine Blasformmaschine (9) zum Umformen der Kunststoffvorformlinge zu Kunststoffbehältnisse, eine Etikettiereinrichtung zum Etikettieren der Kunststoffbehältnisse, eine Abfülleinrichtung zum Befüllen der Kunststoffbehältnisse oder dergleichen handelt.

**Claims**

1. Method for operating an apparatus (1) for producing plastic preforms (10) and plastic containers (20), comprising at least one injection moulding machine (2) and a blow moulding machine (9), wherein the plastic preforms (10) are injection moulded within the injection moulding machine (2) and are formed into plastic containers (20) within the blow moulding machine (9) and are transported from the injection moulding machine (2) to the blow moulding machine (9), and wherein downstream of the injection moulding machine (2) a heating device (8) is arranged which heats the plastic preforms (10) to a temperature necessary for the blow moulding, wherein the injection moulding machine (2) and the blow moulding machine (9) are coupled to one another,
   **characterized in that**
   the plastic preforms (10) produced in the injection moulding machine (2) are transferred directly after production to a thermal preform storage (3) which keeps the plastic preforms (10) at a predetermined, in particular constant, temperature and wherein a speed and/or at least one parameter of at least one subsequent treatment device can be varied and this speed and/or this at least one parameter is adapted to an energy content of the plastic preform.

2. Method according to claim 1,
   **characterized in that**
   the plastic preforms (10) are blocked at the outlet of the thermal preform storage (3) and/or at the inlet of the heating device (8) for heating the plastic preforms (10).

3. Method according to at least one of the preceding claims,
   **characterized in that**
   the temperature inside the thermal preform storage (3) is kept substantially constant.

4. Method according to at least one of the preceding claims,
   **characterized in that**
   the plastic preforms (10) can remain timely indefinitely within the thermal preform storage (3) without the temperature of the plastic preforms (10) increasing.

5. Method according to at least one of the preceding claims,
   **characterized in that**
   the temperature between successive plastic preforms (10) when entering the heating device (8) is +/- 1°C.

6. Apparatus (1) for producing plastic preforms (10) and plastic containers (20), comprising at least one injection moulding machine (2) for injection moulding the plastic preforms (10) and a blow moulding machine (9) for forming the plastic preforms (10) into plastic containers (20), wherein the injection moulding machine (2) and the blow moulding machine (9) can be coupled to one another and with a transport device (5) for transporting the plastic preforms (10) from the injection moulding machine (2) to the blow moulding machine (9), wherein the apparatus (1) further comprises a heating device (8) arranged downstream of the injection moulding machine (2), within which the plastic preforms (10) can be heated to a temperature necessary for the blow moulding,
   **characterized in that**
   the plastic preforms (10) produced in the injection moulding machine (2) are transferred directly after production to a thermal preform storage (3) which keeps the plastic preforms (10) at a predetermined, in particular constant, temperature and wherein a sensor device is provided between the thermal preform storage (3) and a heating device (8) for heating the plastic preforms (10), which measures a value of a preform which is characteristic of the energy content, wherein this value being transferred to a control device (30) with which a speed and/or at least one parameter of at least one subsequent treatment device is regulated.

7. Apparatus (1) according to claim 6,
   **characterized in that**
   a blocking device (18) is provided at the outlet (25) of the thermal preform storage (3) and/or at the inlet (26) of the heating device (8).

8. Apparatus (1) according to at least one of the preceding claims,
   **characterized in that**
   the thermal preform storage (3) is arranged upstream of the injection moulding machine (2) and downstream of the blow moulding machine (9).

**9.** Apparatus (1) according to at least one of the preceding claims,
**characterized in that**
the subsequent treatment unit is a heating device (8) for heating the plastic preforms, a blow-moulding machine (9) for forming the plastic preforms into plastic containers, a labelling device for labelling the plastic containers, a filling device for filling the plastic containers or the like.

**Revendications**

**1.** Procédé pour faire fonctionner un dispositif (1) de fabrication de préformes en matière plastique (10) et de récipients en matière plastique (20), comprenant au moins une machine de moulage par injection (2) et une machine de moulage par soufflage (9), dans lequel les préformes en matière plastique (10) sont moulées par injection à l'intérieur de la machine de moulage par injection (2) et sont mises en forme en des récipients en matière plastique (20) à l'intérieur de la machine de moulage par injection (9) et sont transportées de la machine de moulage par injection (2) à la machine de moulage par soufflage (9), et dans lequel est disposé en aval de la machine de moulage par injection (2) un système de chauffage (8), lequel chauffe les préformes en matière plastique (10) à une température nécessaire au moulage par soufflage, dans lequel la machine de moulage par injection (2) et la machine de moulage par soufflage (9) sont couplées l'une à l'autre,
**caractérisé en ce que**
les préformes en matière plastique (10) fabriquées dans la machine de moulage par injection (2) sont transférées directement après la fabrication à un élément de stockage de préformes thermique (3), lequel maintient les préformes en matière plastique (10) à une température prédéfinie, en particulier constante et dans lequel une vitesse et/ou au moins un paramètre d'au moins un système de traitement qui suit peuvent être modifiés et ladite vitesse et/ou ledit au moins un paramètre sont adaptés à un contenu énergétique de la préforme en matière plastique.

**2.** Procédé selon la revendication 1,
**caractérisé en ce que**
les préformes en matière plastique (10) sont bloquées à la sortie de l'élément de stockage de préformes thermique (3) et/ou à l'entrée du système de chauffage (8) pour chauffer les préformes en matière plastique (10).

**3.** Procédé selon au moins l'une quelconque des revendications précédentes,
**caractérisé en ce que**
la température est maintenue de manière sensiblement constante à l'intérieur de l'élément de stockage de préformes thermique (3).

**4.** Procédé selon au moins l'une quelconque des revendications précédentes,
**caractérisé en ce que**
les préformes en matière plastique (10) peuvent rester de manière illimitée dans le temps à l'intérieur de l'élément de stockage de préformes thermique (3) sans que la température des préformes en matière plastique (10) n'augmente.

**5.** Procédé selon au moins l'une quelconque des revendications précédentes,
**caractérisé en ce que**
la température entre les préformes en matière plastique (10) se suivant les unes les autres lors de l'entrée dans le système de chauffage (8) est de +/- 1 °C.

**6.** Dispositif (1) de fabrication de préformes en matière plastique (10) et de récipients en matière plastique (20), comprenant au moins une machine de moulage par injection (2) pour mouler par injection les préformes en matière plastique (10) et une machine de moulage par soufflage (9) pour mettre en forme les préformes en matière plastique (10) en des récipients en matière plastique (20), dans lequel la machine de moulage par injection (2) et la machine de moulage par soufflage (9) peuvent être couplées l'une à l'autre et à un système de transport (5) pour transporter les préformes en matière plastique (10) de la machine de moulage par injection (2) à la machine de moulage par soufflage (9), dans lequel le dispositif (1) comprend par ailleurs un système de chauffage (8) disposé en aval de la machine de moulage par injection (2), à l'intérieur duquel les préformes en matière plastique (10) peuvent être chauffées à une température nécessaire au moulage par soufflage,
**caractérisé en ce que**
les préformes en matière plastique (10) fabriquées dans la machine de moulage par injection (2) sont transférées directement après la fabrication à un élément de stockage de préformes thermique (3), lequel maintient les préformes en matière plastique (10) à une température prédéfinie en particulier constante et dans lequel est prévu entre l'élément de stockage de préformes thermique (3) et un système de chauffage (8) pour chauffer les préformes en matière plastique (10) un système de détection, lequel mesure une valeur d'une préforme caractéristique du contenu énergétique, dans lequel ladite valeur est transférée à un système de commande (30), avec lequel une vitesse et/ou au moins un paramètre sont régulés par au moins un système de traitement qui suit.

7. Dispositif (1) selon la revendication 6,
**caractérisé en ce que**
un système de blocage (18) est prévu à la sortie (25) de l'élément de stockage de préformes thermique (3) et/ou à l'entrée (26) du système de chauffage (8).

8. Dispositif (1) selon au moins l'une quelconque des revendications précédentes,
**caractérisé en ce que**
l'élément de stockage de préformes thermique (3) est disposé en amont de la machine de moulage par injection (2) et en aval de la machine de moulage par soufflage (9).

9. Dispositif (1) selon au moins l'une quelconque des revendications précédentes,
**caractérisé en ce que**
l'unité de traitement qui suit est un système de chauffage (8) pour chauffer les préformes en matière plastique, une machine de moulage par soufflage (9) pour mettre en forme les préformes en matière plastique en des récipients en matière plastique, un système d'étiquetage pour étiqueter les récipients en matière plastique, un système de transvasement pour remplir les récipients en matière plastique ou similaire.

Fig. 1

Fig. 2

**IN DER BESCHREIBUNG AUFGEFÜHRTE DOKUMENTE**

**In der Beschreibung aufgeführte Patentdokumente**

- EP 2392447 A2
- DE 102016103756 A1
- DE 10150780 A1